(19) 

**Europäisches Patentamt**
**European Patent Office**
**Office européen des brevets**

(11)  **EP 4 629 382 A1**

(12)  **EUROPEAN PATENT APPLICATION**
published in accordance with Art. 153(4) EPC

(43) Date of publication:
08.10.2025 Bulletin 2025/41

(21) Application number: 23896283.1

(22) Date of filing: 16.10.2023

(51) International Patent Classification (IPC):
H01M 10/054 (2010.01)   H01M 10/0567 (2010.01)
H01M 10/0568 (2010.01)   H01M 4/133 (2010.01)
H01M 10/058 (2010.01)   H01M 10/42 (2006.01)

(52) Cooperative Patent Classification (CPC):
H01M 10/054; H01M 4/133; H01M 4/587;
H01M 10/0525; H01M 10/0567; H01M 10/0568;
H01M 10/0569; H01M 10/058; H01M 10/42;
H01M 50/109; H01M 2300/0025; H01M 2300/004;
Y02E 60/10

(86) International application number:
PCT/CN2023/124675

(87) International publication number:
WO 2024/114128 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.11.2022 CN 202211506814

(71) Applicant: Shenzhen Capchem Technology Co.,
Ltd
Shenzhen, Guangdong 518118 (CN)

(72) Inventors:
• LIU, Yang
  Shenzhen, Guangdong 518118 (CN)
• LIU, Zhongbo
  Shenzhen, Guangdong 518118 (CN)
• AO, Xiaohu
  Shenzhen, Guangdong 518118 (CN)
• ZHANG, Qiangqiang
  Shenzhen, Guangdong 518118 (CN)
• ZHENG, Zhongtian
  Shenzhen, Guangdong 518118 (CN)

(74) Representative: Isern Patentes y Marcas S.L.
Avda. Diagonal, 463 Bis, 2°
08036 Barcelona (ES)

(54) **SODIUM-ION BATTERY**

(57) A sodium-ion battery is provided, comprising a positive electrode, a negative electrode and an electrolyte. The electrolyte comprises NaFSI, and the mass percentage C of the usage amount of NaFSI relative to the electrolyte satisfies $1\% \leq C \leq 15\%$. The disclosure ensures that a negative electrode has enough capacity to accommodate, such that $Na^+$ deintercalated from a positive electrode can be completely intercalated into the negative electrode, and the sodium plating of $Na^+$ on the negative electrode is prevented, thereby effectively inhibiting the occurrence of a sodium plating phenomenon; moreover, NaFSI is used in an electrolyte and the content range thereof is controlled, such that while the conductivity of the electrolyte is improved, the film-forming stability of positive and negative sides of a battery is good, and a current collector is not corroded, thereby effectively improving the rate capability and the cycling stability of the battery

图 1

AA Voltage
BB Specific capacity
CC Total discharge capacity of a negative electrode
DD Slope area capacity
EE Platform area capacity

FIG. 1

EP 4 629 382 A1

## Description

### TECHNICAL FIELD

The present disclosure relates to the technical field of electrochemistry, and in particular, to a sodium-ion battery.

### BACKGROUND

Due to the rapid growth in demand of clean energy and the rapid development of secondary battery technology, sodium-ion batteries, with abundant raw material resources, have attracted much attention. The principle and structure of sodium-ion batteries are similar to those of lithium-ion batteries. Compared with a lithium-ion battery, the sodium-ion battery has a wide range of resources and is low in cost, with small cost fluctuation. Moreover, wide temperature range and high safety performance of sodium-ion batteries endow them with potential for replacement. With the continuous progress of sodium-ion battery technology, sodium-ion batteries have broad growth space in the field of energy storage. Therefore, the development of high-performance and low-cost sodium ion batteries is a decisive factor in determining whether they can be industrialized.

However, compared with lithium-ion batteries, sodium-ion batteries still have the problems of low energy density and insufficient cycle life. In addition, the high rate and ultra-low temperature discharge performance of sodium-ion batteries are their important advantages over lithium-ion batteries. Therefore, the improvement of long cycle life and high rate capability of sodium-ion batteries is currently a key issue in the research of sodium-ion battery industry. Since the anode is made of carbon-based materials other than graphite, the focus of the current research in the industry is on how to improve the film forming quality of a solid electrolyte interface (SEI) film on an anode so as to improve the battery performance. However, there are few studies on the influence of the intrinsic characteristics (such as microstructure composition/particle size/specific surface area) of anode materials on battery performance; in addition, NaFSI is a potential additive and co-salt. However, studies show that it has the disadvantage of corroding the current collector and deteriorating the battery performance, thus limiting its application in sodium-ion batteries and affecting the rate capability and cycling performance of sodium-ion batteries.

### SUMMARY

In view of the above technical problems, the present disclosure provides a sodium-ion battery to overcome the problems of insufficient cycling performance and poor rate capability of sodium-ion batteries in the prior art.

The following technical solution is adopted in the present disclosure:

A sodium-ion battery, comprising a positive electrode, a negative electrode and an electrolyte, wherein the electrolyte comprises an electrolyte salt, an electrolyte additive and a solvent;
a slope area capacity ratio A and a platform area capacity ratio B which correspond to a discharge capacity curve of a button cell test performed on the negative electrode satisfy the following relationship:

$$0.66 \leq A/B \leq 2.34$$

wherein, the slope area capacity ratio A is a capacity release ratio in the voltage range of 3.0-0.1V during the button cell test, and the platform area capacity ratio B is a capacity release ratio in the voltage range of 0.1-0V during the button cell test, and A + B = 1; and
the electrolyte comprises NaFSI (sodium bisfluorosulfonylimide) as an electrolyte salt or electrolyte additive; based on 100% of the total mass of the electrolyte, the mass percentage C of the usage amount of NaFSI relative to the electrolyte satisfies 1% ≤ C ≤ 15%.

Specifically, the slope area capacity ratio A is a capacity corresponding to 3.0-0.1V in the button cell test divided by the total capacity, the platform area capacity ratio B is a capacity corresponding to 0.1-0V in the button cell test divided by the total capacity, and the total capacity is a capacity of 3.0-0V in the button cell test.

After a large number of experimental studies, the inventor has found that when the ratio between the slope area capacity ratio A to the platform area capacity ratio B satisfies the ratio within a specific range, and combined with NaFSI as an electrolyte salt or electrolyte additive and a whole battery is made for test, the battery overcomes the risk of NaFSI corroding a current collector while inhibiting sodium plating, and satisfies the performance advantages of high capacity/high rate and long cycle.

It is found in an experiment that when the ratio of a platform area capacity to the slope area capacity of an anode material used by the battery satisfies $0.66 \leq A/B \leq 2.34$, it can be ensured that a negative electrode has enough capacity to accommodate, and a positive electrode capacity release ratio is stabilized, such that $Na^+$ deintercalated from a positive electrode can be completely intercalated into the negative electrode, and the plating of $Na^+$ at the negative electrode is prevented, thereby effectively inhibiting the occurrence of a sodium plating phenomenon. When $A/B < 0.66$, the capacity release of anode material is too low, resulting in sodium plating from the whole battery, cycling degradation and increased battery safety risk; when $A/B > 2.34$, the capacity release of anode material is also too low, resulting in sodium plating from the whole battery, cycling degradation and increased battery safety risk.

Preferably, in some embodiments of the present disclosure, a slope area capacity ratio and a platform area capacity ratio which correspond to a discharge capacity curve of a button cell test performed on the negative electrode satisfy the following relationship:

$$0.81 \leq A/B \leq 1.63.$$

As an electrolyte salt or electrolyte additive, NaFSI can improve the conductivity, electrochemical and thermal stability of an electrolyte, participate in the SEI film forming, reduce side reactions, effectively reduce impedance during battery cycling, and improve cycling performance. The high conductivity of NaFSI can ensure a low use concentration in the electrolyte, and moreover, high conductivity and high capacity exertion can effectively inhibit the occurrence of sodium plating, thus ensuring a long cycle and inhibiting the occurrence of a sodium plating phenomenon.

The mass percentage C of the usage amount of NaFSI relative to the electrolyte satisfies $1\% \leq C \leq 15\%$. Above this range, the electrolyte viscosity increases, the current collector is corroded, and the active material of pole pieces falls off, which seriously deteriorates the battery performance; below this range, the electrolyte conductivity is too low. Specifically, based on 100% of the total mass of the electrolyte, the mass percentage C of the usage amount of NaFSI relative to the electrolyte can be 1%, 2%, 3%, 4%, 5%, 6%, 7%, 8%, 9%, 10%, 11%, 12%, 13%, 14%, and 15%. Preferably, in some embodiments of the present disclosure, based on 100% of the total mass of the electrolyte, the mass percentage C of the usage amount of NaFSI relative to the electrolyte satisfies: $2\% \leq C \leq 11\%$.

Further, the negative electrode comprises an anode active material, the anode active material is a carbon material, and the carbon material is selected from at least one of hard carbon and soft carbon.

Further, the electrolyte salt comprises one or more of sodium perchlorate ($NaClO_4$), sodium tetrafluoroborate ($NaBF_4$), sodium hexafluorophosphate ($NaPF_6$), sodium trifluoroacetate ($CF_3COONa$), sodium tetraphenylborate ($NaB(C_6H_5)_4$), sodium trifluoromethanesulfonate ($NaSO_3CF_3$), sodium bis(fluorosulfonyl)imide ($Na[(FSO_2)_2N]$) or sodium bis(trifluoromethylsulfonyl)imide ($Na[(CF_3SO_2)_2N]$).

Further, the solvent is selected from one or more of C3-C5 carbonate solvents, C2-C6 carboxylic ester solvents and C4-C10 ether solvents; and

based on 100% of the total mass of the electrolyte, the mass percentage of the usage amount of the solvent relative to the electrolyte is 70-92%.

Specifically, in some embodiments of the present disclosure, the carbonate solvents comprise C3-C5 cyclic carbonates or chain carbonates, and the cyclic carbonate is selected from one or more of ethylene carbonate (EC), propylene carbonate (PC), $\gamma$-butyrolactone (GBL), and butylene carbonate (BC); the chain carbonate is selected from one or more of dimethyl carbonate (DMC), ethyl methyl carbonate (EMC), diethyl carbonate (DEC), and dipropyl carbonate (DPC); the carboxylic ester solvent is selected from one or more of ethyl propionate (EP), methyl acetate (MA), ethyl acetate (EA), propyl acetate (PA), butyl acetate, and propyl propionate (PP); the ether solvents comprise C4-C10 cyclic ethers or chain ethers, and the cyclic ether is selected from one or more of 1,3-dioxolane (DOL), 1,4-dioxanone (DX), tetrahydrofuran (THF), 2-methyltetrahydrofuran (2-$CH_3$-THF) and 2-trifluoromethyltetrahydrofuran (2-$CF_3$-THF); the chain ether is selected from one or more of dimethoxymethane (DMM), 1,2-dimethoxyethane (DME), diethylene glycol dimethyl ether (DEGDME), ethylene glycol diethyl ether, triethylene glycol dimethyl ether and tetraethylene glycol dimethyl ether.

Further, the electrolyte additive is selected from one or more of cyclic carbonate compounds, fluorinated cyclic carbonate compounds, cyclic sulfonic acid ester compounds, cyclic sulfate ester compounds, phosphoric ester compounds, borate ester compounds and nitrile compounds;

preferably, the cyclic carbonate compound is selected from one or more of vinylene carbonate, ethylene carbonate and methylene vinyl carbonate;

the fluorinated cyclic carbonate compound is selected from one or more of fluoroethylene carbonate and difluoroethylene carbonate;

the cyclic sulfonic acid ester compound is selected from one or more of 1,3-propanesulfone, 1,4-butanesulfone and allenyl-1,3-sulfonolactone;

the cyclic sulfate ester compound is selected from one or more of vinyl sulfate, 4-methylvinyl sulfate and propylene sulfate;

the phosphoric ester compound is selected from one or more of tris (propargyl) phosphate, trimethyl phosphate, triethyl phosphate and tris (trimethylsilane) phosphate;

the borate ester compound is selected from one or more of tris(trimethylsilane)borate and tris(triethylsilane)borate; and

the nitrile compound is selected from one or more of succinonitrile, glutaronitrile, ethylene glycol bis (propionitrile) ether, hexanetrinitrile, adiponitrile, heptadionitrile, suberic nitrile, nonanedinitrile and sebaconitrile.

Based on 100% of the total mass of the electrolyte, the mass percentage of the usage amount of the electrolyte additive relative to the electrolyte is 1-5%.

Further, the positive electrode comprises a cathode active material, and the cathode active material is selected from one or more of layered transition metal oxides, Prussian compounds, phosphate compounds and sulfate compounds.

Specifically, in some embodiments of the present invention, the chemical formula of the layered transition metal oxide is $Na_xM_yO_z$, $0 < x \leq 1$, $0 < y \leq 1$, $1 < z \leq 2$, and M may be selected from one or more of Cr, Fe, Co, Ni, Cu, Mn, Sn, Mo, Sb, and V; the transition metal oxides are $NaNi_mFe_nMn_pO_2$ ($m + n + p = 1$, $0 \leq m \leq 1$, $0 \leq n \leq 1$, $0 \leq p \leq 1$) and $NaNi_mCo_nMn_pO_2$ ($m + n + p = 1$, $0 \leq m \leq 1$, $0 \leq n \leq 1$, $0 \leq p \leq 1$); more specifically, the layered transition metal oxide is selected from one or more of $Na[Cu_{1/9}Ni_{2/9}Fe_{1/3}Mn_{1/3}]O_2$, $Na_{0.44}MnO_2$, $Na_{2/3}[Fe_{1/2}Mn_{1/2}]O_2$, $Na[Ni_{1/3}Fe_{1/3}Mn_{1/3}]O_2$, $Na_{7/9}[Cu_{2/9}Fe_{1/9}Mn_{2/3}]O_2$, and $NaNi_{0.7}Co_{0.15}Mn_{0.15}O_2$.

In some embodiments of the present disclosure, the molecular formula of the Prussian compound is $Na_xM[M'(CN)_6]_y \cdot zH_2O$, where M is a transition metal, M' is a transition metal, $0 < x \leq 2$, $0 < y \leq 1$, and $0 < z \leq 20$; the Prussian compound is $Na_xMn[Fe(CN)_6]_y \cdot nH_2O$ ($0 < x \leq 2$, $0 < y \leq 1$, and $0 < z \leq 20$), the Prussian compound is $Na_xFe[Fe(CN)_6]_y \cdot nH_2O$ ($0 < x \leq 2$, $0 < y \leq 1$, and $0 < z \leq 20$).

In some embodiments of the present disclosure, the chemical formula of the phosphate compound is $Na_3(MO_{1-x}PO_4)_2F_{1+2x}$, $0 \leq x \leq 1$, and M is selected from one or more of Al, V, Ge, Fe, and Ga; the chemical formula of the phosphate compound is $Na_3(VPO_4)_2F_3$ and $Na_3(VOPO_4)_2F$.

In some embodiments of the present disclosure, the chemical formula of the phosphate compound is $Na_2MPO_4F$, and M is selected from one or more of Fe and Mn; the chemical formulas of the phosphate compounds are $Na_2FePO_4F$ and $Na_2MnPO_4F$.

In some embodiments of the present disclosure, the chemical formula of the sulfate compound is $Na_2M(SO_4)_2 \cdot 2H_2O$, and M can be selected from one or more of Cr, Fe, Co, Ni, Cu, Mn, Sn, Mo, Sb, and V.

Further, the negative electrode further comprises an anode conductive agent, and the anode conductive agent is selected from one or more of acetylene black, Super P, graphene, Ketjen Black, SFG-6, carbon nanotubes, and graphyne.

Further, the negative electrode further comprises an anode binder, the anode binder is selected from one or more of such thermoplastic resins as polyvinylidene fluoride, vinylidene fluoride copolymer, polytetrafluoroethylene, vinylidene fluoride-hexafluoropropylene copolymer, tetrafluoroethylene-hexafluoropropylene copolymer, tetrafluoroethylene-perfluoroalkyl vinyl ether copolymer, ethylene-tetrafluoroethylene copolymer, vinylidene fluoride-tetrafluoroethylene copolymer, vinylidene fluoride-trifluoroethylene copolymer, vinylidene fluoride-trichloroethylene copolymer, vinylidene fluoride-vinyl fluoride copolymer, vinylidene fluoride-hexafluoropropylene-tetrafluoroethylene copolymer, thermoplastic polyimide, polyethylene and polypropylene; acrylic resins; and styrene butadiene rubbers.

Further, the positive electrode further comprises a cathode conductive agent and a cathode binder, the cathode binder and the cathode conductive agent can be the same as the anode binder and the anode conductive agent, respectively, and are not described repeatedly here.

In some embodiments of the present disclosure, the preparation method of the positive electrode or negative electrode is as follows: Uniformly mix the active material, binder, conductive agent and solvent, coat them on the substrate, and remove the solvent to obtain the positive electrode or negative electrode.

In some embodiments of the present disclosure, the sodium-ion battery further comprises a separator located between the positive electrode and the negative electrode.

The separator can be an existing conventional separator, a ceramic separator, a polymer separator, non-woven fabrics, an inorganic-organic composite separator and so on, including but not limited to single-layer polypropylene (PP), single-layer polyethylene (PE), double-layer PP/PE, double-layer PP/PP, and triple-layer PP/PE/PP.

In some embodiments of the present disclosure, the preparation method of the sodium-ion battery is a general preparation method for secondary batteries, namely, combining a positive electrode, a separator, and a negative electrode, and injecting electrolyte to obtain a sodium-ion battery.

Compared with the prior art, the present disclosure has the following beneficial effects:

The sodium-ion battery of the present disclosure can ensure that a negative electrode has enough capacity to accommodate, and a positive electrode capacity release ratio is stabilized, by means of adjusting the ratio between a platform area capacity ratio to the slope area capacity ratio of an anode active material used by the battery, so that $Na^+$ deintercalated from a positive electrode can be completely intercalated into the negative electrode, and the plating of $Na^+$

at the negative electrode is prevented, thereby effectively inhibiting the occurrence of a sodium plating phenomenon; moreover, NaFSI is used as an electrolyte salt or additive in the electrolyte used and the content range of NaFSI is controlled, such that while the conductivity of the electrolyte is improved, the film-forming stability of positive and negative sides of a battery is good, and a current collector is not corroded, thereby effectively improving the rate capability and the cycling stability of the battery.

## BRIEF DESCRIPTION OF DRAWINGS

A brief introduction is made below to the figures necessary for the description of the embodiment or the prior art to illustrate the technical solution in the embodiments of the present disclosure or in the prior art more clearly. Apparently, the figures in the following description are only some embodiments of the present disclosure, and those of ordinary skill in the art can derive other drawings from these figures without creative work.

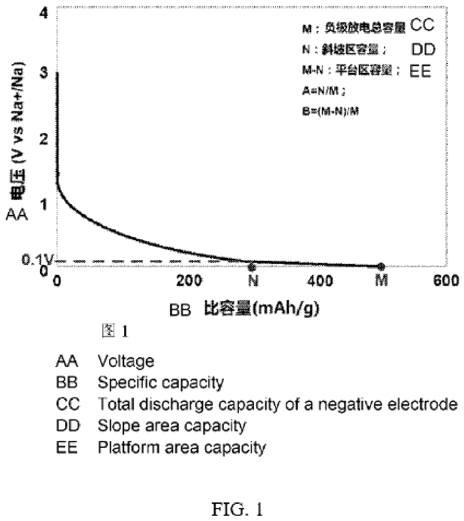

FIG. 1 is a graph illustrating the charge and discharge curves of a negative electrode according to the present disclosure.

## DETAILED DESCRIPTION OF THE EMBODIMENTS

The technical solutions in the embodiments of the present disclosure will be clearly and completely described below with reference to the embodiments of the present disclosure. Apparently, the embodiments described are only some rather than all of the embodiments of the present disclosure. Based on the embodiments of the present disclosure, all other embodiments obtained by ordinary persons skilled in the art without creative efforts shall fall within the protection scope of the present disclosure.

**Adjustment treatment method of platform area capacity and slope area capacity:**

In the present disclosure, the slope area capacity A and the platform area capacity B are obtained by performing a button half-cell test on a negative electrode. The specific steps are as follows:

(1) Use a LAND test system to test the negative electrode. First, discharge at a current density of 0.1C to 0V, set a voltage range as 0-3.0V, obtain a discharge capacity 1, let it stand for 10 min, charge at a current density of 0.1C to 3.0V, and obtain a charge capacity 2;

(2) According to the procedure of Step (1), a discharge and charge curve of the negative electrode can be obtained; during discharging, the voltage-capacity curve when discharged to 0V is taken as a platform area and slope area curve in the present disclosure, see FIG. 1.

In the present disclosure, the slope area capacity A and the platform area capacity B which correspond to a discharge capacity curve of a button cell test performed on the negative electrode by using the above method satisfy a relational expression: $0.66 \leq A/B \leq 2.34$, wherein the slope area capacity A is a capacity release ratio in the voltage range of 0.1-3.0V during the button cell test, and the platform area capacity B is a capacity release ratio in the voltage range of 0.1-0V during the button cell test, and A + B = 1.

In the present disclosure, the adjusting mode of a slope area capacity and a platform area capacity in a button cell test on the negative electrode is as follows: The ratio (A/B) between the slope area capacity A to the platform area capacity B can be controlled by controlling the particle size of the anode active material in the anode of the sodium-ion battery of the present disclosure, the usage amount of an anode conductive agent and the usage amount of an anode film forming additive in the electrolyte.

When a particle size of the anode active material satisfies $4 \ \mu m \leq d50 \leq 8 \ \mu m$, the mass content of the conductive agent in the anode pole piece is 1%-5%, and the mass content of the anode film forming additive in the electrolyte is 1%-5%, it can be realized to adjust the slope area capacity A and the platform area capacity B to satisfy the relational expression: $0.66 \leq A/B \leq 2.34$.

The inventors found that the relationship between the particle size of the anode active material, the usage amount of the anode conductive agent, and the usage amount of the anode film forming additive in the electrolyte and the ratio (A/B) of the slope area capacity A to the platform area capacity B is as follows: With the increase of the anode active material particle size and the usage amount of the anode film forming additive, defects on the anode surface and pores increase, and the ratio of A/B increases; with the increase of the usage amount of the anode conductive agent, sodium ions are more easily intercalated into the negative electrode, and the ratio of A/B decreases. The relationship between the anode active material particle size d50, the usage amount of the anode conductive agent and the usage amount of the anode film forming additive in the electrolyte and A/B can be summarized as shown in Table 1.

Table 1

| Influencing Factor | Range of Values | Impact on A/B |
|---|---|---|
| Anode active material particle size d50 | $4\ \mu m \leq d_{50} \leq 8\ \mu m$ | The A/B ratio increases with the increase of an anode active material particle size |
| Usage amount of anode conductive agent | 1%-5% | When the usage amount of the anode conductive agent increases, the A/B ratio decreases |
| Usage amount of the anode film forming additive in the electrolyte | 1%-5% | When the usage amount of the film forming additive increases, the A/B ratio increases |

For example, an example of adjusting the ratio A/B by controlling the anode active material particle size d50, the usage amount of the anode conductive agent, and the usage amount of the anode film forming additive in the electrolyte can be seen in Table 2.

Table 2

| | d50/$\mu$m | Usage Amount of Conductive Agent /wt. % | Usage Amount of Film Forming Additive /wt. % | A/B |
|---|---|---|---|---|
| Embodiment 1 | 5.5 | 2 | 2.5 | 1.63 |
| Embodiment 2 | 4.5 | 3 | 1 | 0.82 |
| Embodiment 3 | 4.5 | 5 | 1 | 0.66 |
| Embodiment 4 | 4.5 | 4 | 1 | 0.75 |
| Embodiment 5 | 4.5 | 3 | 2 | 0.98 |
| Embodiment 6 | 4.5 | 2 | 2 | 1.16 |
| Embodiment 7 | 5 | 2 | 2 | 1.34 |
| Embodiment 8 | 6 | 2 | 2.5 | 1.89 |
| Embodiment 9 | 7 | 1 | 3.5 | 2.12 |
| Embodiment 10 | 8 | 1 | 5 | 2.34 |

Embodiments 1-18

The present disclosure provides a sodium-ion battery comprising a positive electrode, a negative electrode and an electrolyte.

(1) Preparation of electrolyte

Mix ethylene carbonate (EC), propylene carbonate (PC), and diethyl carbonate (DEC) at a mass ratio of 2:1:7; based on 100% of the total mass of the electrolyte, add NaFSI with a mass percentages shown in Table 3, 5.6% sodium hexafluorophosphate (NaPF$_6$), and 2% fluorinated ethylene carbonate, an anode film forming additive.

(2) Preparation of positive plate

Mix NaNi$_{1/3}$Fe$_{1/3}$Mn$_{1/3}$O$_2$, a cathode active material, Super-P, a conductive carbon black, and polyvinylidene fluoride (PVDF), a binder, at a mass ratio of 93:4:3, and then disperse them in an appropriate amount of N-methyl-2-pyrrolidone (NMP) to obtain a cathode slurry; evenly coat the obtained slurry on both sides of an aluminum foil, after drying, calendering, vacuum drying, and welding it with an aluminum lead wire by an ultrasonic welder to obtain a positive plate with a thickness of 120-150 $\mu$m.

(3) Preparation of negative plate

Mix hard carbon, Super-P, a conductive carbon black, styrene butadiene rubber (SBR), a binder, and carboxymethyl cellulose (CMC) at a mass ratio of 94:1:2.5:2.5, and then disperse them in an appropriate amount of deionized water to obtain an anode slurry; coat the slurry on both sides of a copper foil, after drying, calendering, vacuum drying, and welding it with a nickel lead wire by an ultrasonic welder to obtain a negative plate with a thickness of 120-150 $\mu$m; the proportional relationship A/B of the slope area capacity ratio A to the platform area capacity ratio B in hard carbon is as shown in Table 3.

(4) Preparation of cell

A triple-layer separator with a thickness of 20 $\mu$m is placed between the above prepared positive plate and negative plate, then a sandwich structure composed of the positive plate, the negative plate and the separator is wound, then further a wound body is flattened and put into an aluminum foil packaging bag, and vacuum baking it at 75°C for 48 hours to obtain a cell to be injected with liquid.

(5) Liquid injection and formation of cell

Inject the above prepared electrolyte into the cell in a glove box with a dew point controlled below -40°C, package it in vacuum and let it stand for 24 hours.

The regular formation for charging is as follows: charge at a 0.05C constant current for 180 min, charge at a 0.2C constant current to 3.95V, carry out a secondary vacuum sealing, further charge at a 0.2C constant current to 4.2V, stand still at a room temperature for 24 hours, and then discharge at a 0.2C constant current to 3.0V. In this way, a sodium-ion battery is obtained.

Comparative Examples 1-5

Comparative Examples 1-5 include most of the operation steps in the above embodiments, and their difference lies in: In a process of preparing the electrolyte, based on 100% of the total mass of the electrolyte, add NaFSI with a mass percentage as shown in Comparative Examples 1-5 in Table 3, and anode active materials with values of the slope area capacity ratio A and the platform area capacity ratio B and their proportional relationship A/B as shown in Comparative Examples 1-5 in Table 3 to obtain test results, and fill them into Table 3.

**Performance Tests**

The following performance tests are performed on the sodium-ion batteries prepared in Embodiments 1-18 and Comparative Examples 1-5:

Test on conductivity of the electrolyte at 25°C: Test each group of the prepared electrolyte with a conductivity meter at 25°C.

Sodium plating test: At 25°C, charge a battery at a constant current of 1C and a constant voltage of 3.95V, respectively, and then cut off charging at 0.03C and cut off discharging at 1C/1.5V. Thereafter, after 50 cycles, disassemble the battery and evaluate its effect on suppressing sodium plating from the anode.

Discharge capacity ratio at 4C rate: the ratio of the capacity released by a battery from 3.95-1.5V at 4C rate to the capacity released by the battery at 0.2C rate in an activation phase.

High/room temperature cycle test: Leave a formed battery at 45°C/25°C for 2 hours, charge it to 3.9V at a constant current of 0.5C, then charge it at a constant voltage until the current is 0.03C, and then discharge it to 1.5V at a constant current of 1C for 200 cycles; and capacity retention rate (%) = (discharge capacity C2 - charge capacity C1)/charge capacity C1$\times$100%.

The test results are shown in Table 3.

Table 3

| Group | Slope Area Capacity Ratio A | Platform Area Capacity Ratio B | A/B | Mass Percentage of NaFSI/% | Conductivity of the Electrolyte at 25°C/% | Discharge Capacity Ratio at 4C Rate/% | Capacity Retention Rate After 200 Cycles at a Room Temperature/% | Capacity Retention Rate After 200 Cycles at a High Temperature /% | Whether the Current Collector Is Corroded | Analysis of Sodium Plating Phenomenon after 50 Cycles |
|---|---|---|---|---|---|---|---|---|---|---|
| Embodiment 1 | 0.62 | 0.38 | 1.63 | 11 | 7.89 | 92.1 | 97 | 96.5 | No | No sodium plating observed |
| Embodiment 2 | 0.45 | 0.55 | 0.82 | 11 | 7.89 | 92.9 | 96.8 | 96.3 | No | No sodium plating observed |
| Embodiment 3 | 0.40 | 0.60 | 0.67 | 11 | 7.89 | 87.2 | 92.9 | 94.1 | No | No sodium plating observed |
| Embodiment 4 | 0.43 | 0.57 | 0.75 | 11 | 7.89 | 87.9 | 93.4 | 92.6 | No | No sodium plating observed |
| Embodiment 5 | 0.49 | 0.51 | 0.96 | 11 | 7.89 | 93.1 | 94.3 | 94.8 | No | No sodium plating observed |
| Embodiment 6 | 0.54 | 0.46 | 1.17 | 11 | 7.89 | 93.4 | 94.9 | 94.9 | No | No sodium plating observed |
| Embodiment 7 | 0.57 | 0.43 | 1.33 | 11 | 7.89 | 93.6 | 95.6 | 95.1 | No | No sodium plating observed |
| Embodiment 8 | 0.65 | 0.35 | 1.86 | 11 | 7.89 | 91.7 | 93.8 | 93.2 | No | No sodium plating observed |
| Embodiment 9 | 0.68 | 0.32 | 2.13 | 11 | 7.89 | 92 | 94.2 | 94.3 | No | No sodium plating observed |

| Group | Slope Area Capacity Ratio A | Platform Area Capacity Ratio B | A/B | Mass Percentage of NaFSI/% | Conductivity of the Electrolyte at 25°C/% | Discharge Capacity Ratio at 4C Rate/% | Capacity Retention Rate After 200 Cycles at a Room Temperature/% | Capacity Retention Rate After 200 Cycles at a High Temperature /% | Whether the Current Collector Is Corroded | Analysis of Sodium Plating Phenomenon after 50 Cycles |
|---|---|---|---|---|---|---|---|---|---|---|
| Embodiment 10 | 0.70 | 0.30 | 2.33 | 11 | 7.89 | 92.1 | 94.1 | 93.4 | No | No sodium plating observed |
| Embodiment 11 | 0.62 | 0.38 | 1.63 | 1 | 4.92 | 84.2 | 89.8 | 87.2 | No | No sodium plating observed |
| Embodiment 12 | 0.62 | 0.38 | 1.63 | 2 | 5.61 | 87.4 | 93.2 | 92.5 | No | No sodium plating observed |
| Embodiment 13 | 0.62 | 0.38 | 1.63 | 4 | 6.26 | 88.9 | 94.2 | 93.4 | No | No sodium plating observed |
| Embodiment 14 | 0.62 | 0.38 | 1.63 | 7 | 6.92 | 90.6 | 95.5 | 94.8 | No | No sodium plating observed |
| Embodiment 15 | 0.62 | 0.38 | 1.63 | 9 | 7.43 | 91.3 | 96.1 | 95.3 | No | No sodium plating observed |
| Embodiment 16 | 0.62 | 0.38 | 1.63 | 11 | 7.89 | 92 | 97 | 96.5 | No | No sodium plating observed |
| Embodiment 17 | 0.62 | 0.38 | 1.63 | 13 | 8.62 | 90.1 | 95.5 | 94.8 | No | No sodium plating observed |
| Embodiment 18 | 0.62 | 0.38 | 1.63 | 15 | 9.87 | 86.5 | 94.2 | 93.3 | No | No sodium plating observed |

| Group | Slope Area Capacity Ratio A | Platform Area Capacity Ratio B | A/B | Mass Percentage of NaFSI/% | Conductivity of the Electrolyte at 25°C/% | Discharge Capacity Ratio at 4C Rate/% | Capacity Retention Rate After 200 Cycles at a Room Temperature/% | Capacity Retention Rate After 200 Cycles at a High Temperature /% | Whether the Current Collector Is Corroded | Analysis of Sodium Plating Phenomenon after 50 Cycles |
|---|---|---|---|---|---|---|---|---|---|---|
| Comparative Example 1 | 0.38 | 0.62 | 0.61 | 11 | 7.89 | 68 | 83.5 | 81.9 | No | Extensive foamy sodium plating occurs |
| Comparative Example 2 | 0.71 | 0.29 | 2.45 | 11 | 7.89 | 65 | 84.6 | 83.2 | No | Extensive foamy sodium plating occurs |
| Comparative Example 3 | 0.62 | 0.38 | 1.63 | 0 | 4.12 | 42 | 80.3 | 79.5 | No | No sodium plating observed |
| Comparative Example 4 | 0.62 | 0.38 | 1.63 | 0.5 | 4.48 | 51 | 83.6 | 82.7 | No | No sodium plating observed |
| Comparative Example 5 | 0.62 | 0.38 | 1.63 | 18 | 8.87 | 86 | 89.4 | 88.2 | Serious corrosion occurs | No sodium plating observed |

EP 4 629 382 A1

It can be seen from the test results of Embodiments 1-18 that when the ratio between a platform area capacity ratio to the slope area capacity ratio at an anode material used by the battery satisfies $0.66 \leq A/B \leq 2.34$, it can be ensured that a negative electrode has enough capacity to accommodate, and a positive electrode capacity release ratio is stabilized, so that $Na^+$ deintercalated from a positive electrode can be completely intercalated into the negative electrode, and the plating of $Na^+$ at the negative electrode is prevented, thereby effectively inhibiting the risk of sodium plating of the battery; moreover, controlling the usage amount of NaFSI in the electrolyte is conducive to improving the cycling performance of sodium-ion batteries, increasing the rate capability and inhibiting the risk of sodium plating, thus enhancing the safety performance of batteries. From the test results of Embodiments 1-10 and Comparative Examples 1-2, it can be seen that when the ratio A/B of a platform area capacity ratio to a slope area capacity ratio is too high or too low, not only sodium plating will occur, but also the rate and cycle performance of the battery will be reduced. This is because the platform area capacity and the slope area capacity can control the influence of different sodium storage mechanisms of sodium ions in anode materials to some extent, but the degree of reduction is less than that of NaSFI. From the test results of Examples 11-18 and Comparative Examples 3-5, it can be seen that a certain content of NaSFI used as an electrolyte additive or electrolyte salt can improve the conductivity, electrochemical stability and thermal stability of the electrolyte, participate in the formation of SEI film, reduce side reactions, and effectively reduce impedance during a battery cycle. When the content of NaSFI is too high, the viscosity of the electrolyte will increase and the electrolyte will corrode the current collector. The active material on the pole piece will fall off, seriously degrading the battery performance; when the content of NaSFI is too low, the conductivity of electrolyte will be too low.

To sum up, the present disclosure provides a sodium-ion battery, which can ensure that a negative electrode has enough capacity to accommodate, and a positive electrode capacity release ratio is stabilized, by means of adjusting the ratio between a platform area capacity ratio to the slope area capacity ratio of an anode active material used by the battery, so that $Na^+$ deintercalated from a positive electrode can be completely intercalated into the negative electrode, and the plating of $Na^+$ at the negative electrode is prevented, thereby effectively inhibiting the occurrence of a sodium plating phenomenon; moreover, NaFSI is used as an electrolyte salt or additive in the electrolyte used and the content range of NaFSI is controlled, such that while the conductivity of the electrolyte is improved, the film-forming stability of positive and negative sides of a battery is good, and a current collector is not corroded, thereby effectively improving the rate capability and the cycling stability of the battery.

The present disclosure has been further described above with reference to specific embodiments, but it should be understood that the specific description herein shall not be construed as limiting the essence and scope of the present disclosure. All modifications made by ordinary persons skilled in the art to the above embodiments after reading this specification fall within the protection scope of the present disclosure.

## Claims

1. A sodium-ion battery, comprising a positive electrode, a negative electrode and an electrolyte, wherein the electrolyte comprises an electrolyte salt, an electrolyte additive and a solvent;

   a slope area capacity ratio A and a platform area capacity ratio B which correspond to a discharge capacity curve of a button cell test performed on the negative electrode satisfy the following relationship:

   $$0.66 \leq A/B \leq 2.34$$

   wherein, the slope area capacity ratio A is a capacity release ratio in the voltage range of 3.0-0.1V during the button cell test, and the platform area capacity ratio B is a capacity release ratio in the voltage range of 0.1-0V during the button cell test, and A + B = 1; and
   the electrolyte comprises NaFSI as an electrolyte salt or electrolyte additive; based on 100% of the total mass of the electrolyte, the mass percentage C of the usage amount of NaFSI relative to the electrolyte satisfies $1\% \leq C \leq 15\%$.

2. The sodium-ion battery according to claim 1, wherein a slope area capacity ratio A and a platform area capacity ratio B which correspond to a discharge capacity curve of a button cell test performed on the negative electrode satisfy the following relationship:

   $$0.81 \leq A/B \leq 1.63.$$

3. The sodium-ion battery according to claim 1, wherein based on 100% of the total mass of the electrolyte, the mass percentage C of the usage amount of NaFSI relative to the electrolyte satisfies: $2\% \leq C \leq 11\%$.

4. The sodium-ion battery according to claim 1, wherein the negative electrode comprises an anode active material, and the anode active material is a carbon material; and
the carbon material is selected from at least one of hard carbon and soft carbon.

5. The sodium-ion battery according to claim 1, wherein the electrolyte salt comprises one or more of sodium perchlorate, sodium tetrafluoroborate, sodium hexafluorophosphate, sodium trifluoroacetate, sodium tetraphenylborate, sodium trifluoromethanesulfonate, sodium bis(fluorosulfonyl)imide or sodium bis(trifluoromethylsulfonyl) imide.

6. The sodium-ion battery according to claim 1, wherein the solvent is selected from one or more of C3-C5 carbonate solvents, C2-C6 carboxylic ester solvents and C4-C10 ether solvents; and
based on 100% of the total mass of the electrolyte, the mass percentage of the usage amount of the solvent relative to the electrolyte is 70-92%.

7. The sodium-ion battery according to claim 6, wherein:

the carbonate solvents comprise C3-C5 cyclic carbonates or chain carbonates, and the cyclic carbonate is selected from one or more of ethylene carbonate, propylene carbonate, $\gamma$-butyrolactone, and butylene carbonate;
the chain carbonate is selected from one or more of dimethyl carbonate, ethyl methyl carbonate, diethyl carbonate, and dipropyl carbonate;
the C2-C6 carboxylic ester solvent is selected from one or more of ethyl propionate, methyl acetate, ethyl acetate, propyl acetate, butyl acetate, and propyl propionate; and
the ether solvents comprise C4-C10 cyclic ethers or chain ethers, the cyclic ether is selected from one or more of 1,3-dioxolane, 1,4-dioxanone, tetrahydrofuran, 2-methyltetrahydrofuran and 2-trifluoromethyltetrahydrofuran, and the chain ether is selected from one or more of dimethoxymethane, 1,2-dimethoxyethane, diethylene glycol dimethyl ether, ethylene glycol diethyl ether, triethylene glycol dimethyl ether and tetraethylene glycol dimethyl ether.

8. The sodium-ion battery according to claim 1, wherein the electrolyte additive is selected from one or more of cyclic carbonate compounds, fluorinated cyclic carbonate compounds, cyclic sulfonic acid ester compounds, cyclic sulfate ester compounds, phosphoric ester compounds, borate ester compounds and nitrile compounds;

preferably, the cyclic carbonate compound is selected from one or more of vinylene carbonate, ethylene carbonate and methylene vinyl carbonate;
the fluorinated cyclic carbonate compound is selected from one or more of fluoroethylene carbonate and difluoroethylene carbonate;
the cyclic sulfonic acid ester compound is selected from one or more of 1,3-propanesulfone, 1,4-butanesulfone and allenyl-1,3-sulfonolactone;
the cyclic sulfate ester compound is selected from one or more of vinyl sulfate, 4-methylvinyl sulfate and propylene sulfate;
the phosphoric ester compound is selected from one or more of tris (propargyl) phosphate, trimethyl phosphate, triethyl phosphate and tris (trimethylsilane) phosphate;
the borate ester compound is selected from one or more of tris(trimethylsilane)borate and tris(triethylsilane) borate; and
the nitrile compound is selected from one or more of succinonitrile, glutaronitrile, ethylene glycol bis (propionitrile) ether, hexanetrinitrile, adiponitrile, heptadionitrile, suberic nitrile, nonanedinitrile and sebaconitrile.

9. The sodium-ion battery according to claim 8, wherein based on 100% of the total mass of the electrolyte, the mass percentage of the usage amount of the electrolyte additive relative to the electrolyte is 1-5%.

10. The sodium-ion battery according to any one of claims 1-9, wherein the positive electrode comprises a cathode active material, and the cathode active material is selected from one or more of layered transition metal oxides, Prussian compounds, phosphate compounds and sulfate compounds;

preferably, the chemical formula of the layered transition metal oxide is $Na_xM_yO_z$, $0 < x \leq 1$, $0 < y \leq 1$, $1 < z \leq 2$, and M is selected from one or more of Cr, Fe, Co, Ni, Cu, Mn, Sn, Mo, Sb, and V; the transition metal oxides are

$NaNi_mFe_nMn_pO_2$ ($m + n + p = 1$, $0 \le m \le 1$, $0 \le n \le 1$, $0 \le p \le 1$) and $NaNi_mCo_nMn_pO_2$ ($m + n + p = 1$, $0 \le m \le 1$, $0 \le n \le 1$, $0 \le p \le 1$);

the molecular formula of the Prussian compound is $Na_xM[M'(CN)_6]_y \cdot zH_2O$, where M is a transition metal, M' is a transition metal, $0 < x \le 2$, $0 < y \le 1$, and $0 < z \le 20$;

the chemical formula of the phosphate compound is $Na_3(MO_{1-x}PO_4)_2F_{1+2x}$, $0 \le x \le 1$, and M is selected from one or more of Al, V, Ge, Fe, and Ga; and

the chemical formula of the sulfate compound is $Na_2M(SO_4)_2 \cdot 2H_2O$, and M is selected from one or more of Cr, Fe, Co, Ni, Cu, Mn, Sn, Mo, Sb, and V.

図 1

FIG. 1

AA Voltage
BB Specific capacity
CC Total discharge capacity of a negative electrode
DD Slope area capacity
EE Platform area capacity

## INTERNATIONAL SEARCH REPORT

| International application No. |
|---|
| **PCT/CN2023/124675** |

| A. | CLASSIFICATION OF SUBJECT MATTER |
|---|---|

H01M10/054(2010.01)i; H01M10/0567(2010.01)i; H01M10/0568(2010.01)i; H01M4/133(2010.01)i; H01M10/058(2010.01)i; H01M10/42(2006.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS, CNTXT, CNKI, DWPI, ENTXT: 钠, 电池, 电解液, NaFSI, 双氟磺酰亚胺钠, 扣电测试, 放电容量曲线, 电池的倍率性能, 循环稳定性, sodium-ion battery, electrolyte, sodium nickel-metal oxide, conductive carbon, sodium bis(fluorosulfonyl) imide, the buckle electricity test, discharge capacity curve, the rate performance, the cycling stability

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115692827 A (SHENZHEN CAPCHEM TECHNOLOGY CO., LTD.) 03 February 2023 (2023-02-03)<br>claims 1-10, and description, paragraphs 0006-0063, embodiments 1-18 | 1-10 |
| A | CN 115132986 A (SUZHOU INSTITUTE OF NANO-TECH AND NANO-BIONICS, CHINESE ACADEMY OF SCIENCES) 30 September 2022 (2022-09-30)<br>entire document | 1-10 |
| A | CN 104600242 A (SHENZHEN BTR NEW ENERGY MATERIALS CO., LTD) 06 May 2015 (2015-05-06)<br>entire document | 1-10 |
| A | CN 106058193 A (SOUTH CHINA UNIVERSITY OF TECHNOLOGY) 26 October 2016 (2016-10-26)<br>entire document | 1-10 |
| A | WO 2022160534 A1 (SHANDONG YUHUANG NEW ENERGY TECHNOLOGY CO., LTD.) 04 August 2022 (2022-08-04)<br>entire document | 1-10 |

| ✓ | Further documents are listed in the continuation of Box C. | ✓ | See patent family annex. |
|---|---|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 January 2024** | **22 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/124675**

| C. | DOCUMENTS CONSIDERED TO BE RELEVANT | |
|---|---|---|
| Category* | Citation of document, with indication, where appropriate, of the relevant passages | Relevant to claim No. |
| A | US 2019131625 A1 (CONTEMPORARY AMPEREX TECHNOLOGY CO., LTD.) 02 May 2019 (2019-05-02) entire document | 1-10 |

Form PCT/ISA/210 (second sheet) (July 2022)

**INTERNATIONAL SEARCH REPORT**
Information on patent family members

International application No.

**PCT/CN2023/124675**

| Patent document cited in search report | | | Publication date (day/month/year) | Patent family member(s) | | | Publication date (day/month/year) |
|---|---|---|---|---|---|---|---|
| CN | 115692827 | A | 03 February 2023 | None | | | |
| CN | 115132986 | A | 30 September 2022 | None | | | |
| CN | 104600242 | A | 06 May 2015 | None | | | |
| CN | 106058193 | A | 26 October 2016 | None | | | |
| WO | 2022160534 | A1 | 04 August 2022 | None | | | |
| US | 2019131625 | A1 | 02 May 2019 | EP | 3477745 | A1 | 01 May 2019 |
| | | | | EP | 3477745 | B1 | 05 January 2022 |
| | | | | ES | 2906148 | T3 | 13 April 2022 |
| | | | | HUE | 057939 | T2 | 28 June 2022 |
| | | | | PL | 3477745 | T3 | 07 March 2022 |
| | | | | PT | 3477745 | T | 14 February 2022 |
| | | | | US | 10818924 | B2 | 27 October 2020 |

Form PCT/ISA/210 (patent family annex) (July 2022)